(19) Europäisches Patentamt
European Patent Office
Office européen des brevets

(11) EP 0 765 369 B1

(12) EUROPEAN PATENT SPECIFICATION

(45) Date of publication and mention of the grant of the patent:
**28.12.2005 Bulletin 2005/52**

(21) Application number: **95922129.2**

(22) Date of filing: **01.06.1995**

(51) Int Cl.[7]: **C10G 67/00**, C10G 69/00, C10G 67/02, B01D 3/00, C10G 45/02

(86) International application number:
**PCT/US1995/006727**

(87) International publication number:
**WO 1995/035353 (28.12.1995 Gazette 1995/55)**

# (54) PROCESS FOR THE REMOVAL OF MERCAPTANS AND HYDROGEN SULFIDE FROM HYDROCARBON STREAMS

VERFAHREN ZUR ENTFERNUNG VON MERCAPTANEN UND SCHWEFEL- WASSERSTOFF AUS KOHLENWASSERSTOFFEN

PROCEDE D'ELIMINATION DE MERCAPTANS ET DE SULFURE D'HYDROGENE DANS DES FLUX D'HYDROCARBURES

(84) Designated Contracting States:
**BE DE ES FR GB IT NL PT**

(30) Priority: **17.06.1994 US 262033**
**12.12.1994 US 353724**

(43) Date of publication of application:
**02.04.1997 Bulletin 1997/14**

(73) Proprietor: **CHEMICAL RESEARCH & LICENSING COMPANY**
**Pasadena, Texas 77507 (US)**

(72) Inventor: **HEARN, Dennis**
**Pasadena, TX 77507 (US)**

(74) Representative: **Zumstein jun., Fritz et al**
**Zumstein & Klingseisen**
**Patentanwälte**
**Bräuhausstrasse 4**
**80331 München (DE)**

(56) References cited:
**US-A- 3 960 683**
**US-A- 5 321 163**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 765 369 B1

Printed by Jouve, 75001 PARIS (FR)

## Description

The present invention relates generally to a process for the removal of mercaptans and/or hydrogen sulfide ($H_2S$) from petroleum distillate streams. More particularly the invention relates to a process wherein the petroleum distillate contains diolefins which are selectively reacted with the mercaptans and/or hydrogen sulfide ($H_2S$) to form sulfides. Most particularly the invention relates to a process wherein the reaction of the mercaptans and/or hydrogen sulfide ($H_2S$) with the diolefins is carried out simultaneously with a fractional distillation to remove the sulfides, and thus the sulfur, from the distillate.

Related Information

Petroleum distillate streams contain a variety of organic chemical components. Generally the streams are defined by their boiling ranges which determine the compositions. The processing of the streams also affects the composition. For instance, products from either catalytic cracking or thermal cracking processes contain high concentrations of olefinic materials as well as saturated (alkanes) materials and polyunsaturated materials (diolefins). Additionally, these components may be any of the various isomers of the compounds.

The petroleum distillates often contain unwanted contaminants such as sulfur and nitrogen compounds. These contaminants often are catalyst poisons or produce undesirable products upon further processing. In particular the sulfur compounds can be troublesome. The sulfur compounds are known catalyst poisons for naphtha reforming catalysts and hydrogenation catalysts. The sulfur compounds present in a stream are dependent upon the boiling range of the distillate. In a light naphtha of 43 to 121°C boiling range (110-250°F boiling range) the predominant sulfur compounds are mercaptans. The most common method for removal of the $H_2S$ and mercaptans is caustic washing of the organic streams.

Another method of removal of the sulfur compounds is by hydrodesulfurization (HDS) in which the petroleum distillate is passed over a solid particulate catalyst comprising a hydrogenation metal supported on an alumina base. Additionally copious quantities of hydrogen are included in the feed. The following equations illustrate the reactions in a typical HDS unit:

$$(1) \qquad RSH + H_2 \text{ ---> } RH + H_2S$$

$$(2) \qquad RCl + H_2 \text{ ---> } RH + HCl$$

$$(3) \qquad 2RN + 4H_2 \text{ ---> } RH + NH_3$$

$$(4) \qquad ROOH + 2H_2 \text{ ---> } RH + H_2O$$

Typical operating conditions for the HDS reactions are:

| | |
|---|---|
| Temperature | 315-415°C (600-780°F) |
| Pressure | 4233-20781 kPa (600-3000 psig) |
| $H_2$ recycle rate | 42.5 - 85 $m^3$/159 l (1500-3000 SCF/bbl) |
| Fresh $H_2$ makeup | 19.8-28.3 $m^3$/159 l (700-1000 SCF/bbl) |

As may be seen the emphasis has been upon hydrogenating the sulfur and other contaminating compounds. The sulfur is then removed in the form of gaseous $H_2S$, which in itself is a pollutant and requires further treatment.

In the production of tertiary amyl methyl ether (TAME) for use as a gasoline additive generally a light cracked naphtha (LCN) is used as the source of the olefins for the etherification reaction. This LCN may contain sulfur as a contaminant in the form of mercaptans in concentrations of up to hundreds wppm. These mercaptans are inhibitors for the hydrogenation catalyst used to hydrogenate dienes in the feed to an etherification unit or to an alkylation unit. As noted above, one common method to remove the sulfur compounds has been caustic extraction.

US-A-5 321 163 discloses a process for removing mercaptans and diolefins from a naphtha hydrocarbon stream which involves feeding a hydrocarbon stream and diolefins to a distillation column reactor along with hydrogen in the presence of a supported Group VIII metal oxide catalyst which acts as a catalytic distillation structure. The

sulphide products are withdrawn from the reactor as bottoms, and the distillate products are further reacted with methanol in an etherification process to produce tertiary methyl ether.

According to the present invention there is provided a process for removing mercaptans and/or hydrogen sulfide from a hydrocarbon stream, to produce a hydrocarbon stream with a reduced mercaptan and/or sulfide content comprising the steps of (a) feeding diolefins and a hydrocarbon stream containing mercaptans and/or hydrogen sulfide to a distillation column reactor into a feed zone in said reactor , whereby the said diolefins and the said hydrocarbon stream are together with the hydrogen of step (6) the only feeding components (b) feeding hydrogen to said distillation column reactor at a rate to maintain the catalyst in the active form and below that which would cause flooding of the column; (c) concurrently in said distillation column reactor (i) contacting the diolefins with said mercaptans, hydrogen sulfide or mixtures thereof contained within said hydrocarbon stream in the presence of hydrogen in a distillation reaction zone containing a supported Group VIII metal oxide catalyst prepared in the form of a catalytic distillation structure and reacting a portion of said mercaptans and/or hydrogen sulfide with a portion of the diolefins thereby forming sulfide products and a distillate product, having a reduced mercaptan and/or hydrogen sulfide content and (ii) separating said sulfides from said distillate product by fractional distillation; (d) withdrawing distillate product from said distillation column reactor at a point above said distillation reaction zone, said distillate product having a reduced mercaptan and/or hydrogen sulfide content: and (e) withdrawing sulfide products from said distillation column reactor at a point below said distillation reaction zone , said distillation colomn reactor being operated under conditions to maintain froth throughout the catalyst bed by control of the bottoms and/or overheads withdrawal rate and the overhead pressure in the distillation column reactor being such that the mixture is boaling in the catalyst bed and being between 96 and 1820 kPa (0 and 250 psig) and the temperature being within 38 and 149°C (100 to 300°F).

The present invention presents a new process for the removal of mercaptans and/or hydrogen sulfide ($H_2S$) from aliphatic hydrocarbon streams, containing 4 to 12 carbon atoms. Light cracked stream which is used as a feed to an etherification or alkylation unit is a preferred feed for this process. The light cracked naphtha contains $C_4$'s to $C_8$'s components which may be saturated (alkanes), unsaturated (olefins) and poly-unsaturated (diolefins) along with minor amounts of the mercaptans. The light naphtha is generally depentanized in a fractional distillation column to remove that portion containing the $C_6$ and higher boiling materials ($C_6$+) as bottoms and the $C_5$ and lower boiling materials ($C_5$-) as overheads. One embodiment of the present invention utilizes the upper portion of the depentanizer to react substantially all of the mercaptans and/or hydrogen sulfide ($H_2S$) contained in the light cracked naphtha with a portion of the diolefins to form sulfides which are higher boiling than the $C_5$ fraction containing the amylenes which are fed to the etherification unit. The sulfides are removed as bottoms from the depentanizer column along with the $C_6$+ fraction and can be simply remixed into the final gasoline fraction.

The catalyst used for the reaction is a palladium oxide, preferably 0.1 to 1.0 wt% on an alumina base which has been configured as a catalytic distillation structure.

Hydrogen is provided as necessary to support the reaction and to reduce the oxide and maintain it in the hydride state. The distillation column reactor is operated at a pressure such that the reaction mixture is boiling in the bed of catalyst. A "froth level" is maintained throughout the catalyst bed by control of the bottoms and/or overheads withdrawal rate which improves the effectiveness of the catalyst thereby decreasing the height of catalyst needed. As may be appreciated the liquid is boiling and the physical state is actually a froth having a higher density than would be normal in a packed distillation column but less than the liquid without the boiling vapors.

The feed and the hydrogen are preferably fed to the distillation column reactor separately or they may be mixed prior to feeding. A mixed feed is fed below the catalyst bed or at the lower end of the bed. Hydrogen alone is fed below the catalyst bed and the hydrocarbon stream is fed below the bed to about the mid one-third of the bed.

FIG. 1 is a simplified flow diagram of one embodiment of the invention.

The present invention provides a process for the reaction of diolefins within a petroleum distillate with the mercaptans and/or hydrogen sulfide ($H_2S$) within the distillate to form sulfides and concurrent separation of the higher boiling sulfides from the distillate. This requires a distillation column reactor which contains an appropriate catalyst in the form of a catalytic distillation structure.

The $C_5$'s in the feed to the present unit are contained in a single "light naphtha" cut which may contain everything from $C_5$'s through $C_8$'s and higher. This mixture can easily contain 150 to 200 components. Mixed refinery streams often contain a broad spectrum of olefinic compounds. This is especially true of products from either catalytic cracking or thermal cracking processes. Refinery streams are usually separated by fractional distillation, and because they often contain compounds that are very close in boiling points, such separations are not precise. A $C_5$ stream, for instance, may contain $C_4$'s and up to $C_8$'s. These components may be saturated (alkanes), unsaturated (mono-olefins), or poly-unsaturated (diolefins). Additionally, the components may be any or all of the various isomers of the individual compounds. Such streams typically contain 15 to 30 weight % of the isoamylenes(total methyl butene isomers).

Such refinery streams also contain small amounts of sulfur which must be removed. The sulfur compounds are generally found in a light cracked naphtha stream as mercaptans and/or hydrogen sulfide ($H_2S$) which poison the hydrogenation catalyst used to selectively hydrogenate diolefins. Removal of sulfur compounds is generally termed

"sweetening" a stream.

Several of the minor components (diolefins) in the feed will react slowly with oxygen during storage to produce "gum" and other undesirable materials. However, these components also react very rapidly in the TAME process to form a yellow, foul smelling gummy material and consume acid in an alkylation unit. Thus it is seen to be desirable to remove these components whether the "light naphtha" cut is to be used only for gasoline blending by itself or as feed to a TAME or alkylation process.

Catalysts which are useful in the mercaptan-diolefin reaction include the Group VIII metals. Generally the metals are deposited as the oxides on an alumina support. The supports are usually small diameter extrudates or spheres. The catalyst must then be prepared in the form of a catalytic distillation structure. The catalytic distillation structure must be able to function as catalyst and as mass transfer medium. The catalyst must be suitably supported and spaced within the column to act as a catalytic distillation structure. In a preferred embodiment the catalyst is contained in a woven wire mesh structure as disclosed in U.S. Patent No. 5.266,546. Other catalytic distillation structures useful for this purpose are disclosed in U.S. patents 4,731,229 and 5,073,236. Suitable catalysts for the reaction are 0.34 wt% Pd on 2.83 to 1.41 mm sieve opening mesh (7 to 14 mesh) $Al_2O_3$ (alumina) spheres, designated as G-68C and 0.4 wt% Pd on 7 to 14 mesh alumina spheres designated as G-68C-1, supplied by United Catalysts Inc. Typical physical and chemical properties of the catalysts as provided by the manufacturer are as follows:

TABLE I

| | | |
|---|---|---|
| Designation | G-68C | G-68C-1 |
| Form | Sphere | Sphere |
| Nominal size | 7x14 mesh | 7x14 mesh |
| Pd. wt% | 0.3 (0.27-0.33) | 0.4 (0.37-0.43) |
| Support | High purity alumina | High purity alumina |

The catalyst is believed to be the hydride of palladium which is produced during operation. The hydrogen rate to the reactor must be sufficient to maintain the catalyst in the active form because hydrogen is lost from the catalyst by hydrogenation, but kept below that which would cause flooding of the column.

Generally the mole ratio of hydrogen to diolefins and acetylenes in the feed is at least 1.0 to 1.0 and preferably at least 2.0 to 1.0 and more preferably at least 10.0 to 1.

The catalyst also catalyzes the selective hydrogenation of the polyolefins contained within the light cracked naphtha and to a lesser degree the isomerization of some of the mono-olefins. Generally the relative absorption preference is as follows:

(1) Sulfur compounds
(2) diolefins
(3) mono-olefins

If the catalyst sites are occupied by a more strongly absorbed species, reaction of these weaker absorbed species cannot occur.

The reaction of interest is the reaction of the mercaptans and/or hydrogen sulfide ($H_2S$) with diolefins. The equation of interest which describes the reaction is:

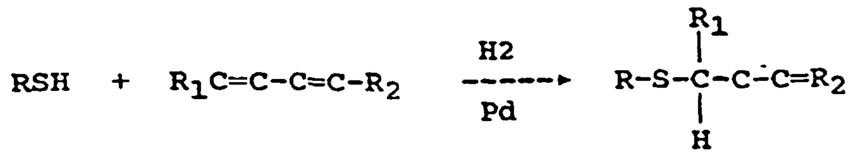


Where R, $R_1$ and $R_2$ are independently selected from hydrogen and hydrocarbyl groups of 1 to 20 carbon atoms.

This may be compared to the HDS reaction which consumes hydrogen. The only hydrogen consumed in the removal of the mercaptans and/or hydrogen sulfide ($H_2S$) in the present invention is that necessary to keep the catalyst in the reduced "hydride" state. If there is concurrent hydrogenation of the dienes, then hydrogen will be consumed in that reaction.

Typical of the mercaptan compounds which may be found to a greater or lesser degree in a light cracked naphtha are: methyl mercaptan, b.p. 6.1°C (43° F), ethyl mercaptan b.p. 37°C (99°F), n-propyl mercaptan b.p. 67.8°C

(154°F), iso-propyl mercaptan b.p. 57-60°C (135-140°F), iso-butyl mercaptan b.p. 87,8°C (190°F), tert-butyl mercaptan b.p. 63.9°C (147°F), n-butyl mercaptan b.p. 97.8°C (208°F), sec-butyl mercaptan b.p. 95°C (203°F), iso-amyl mercaptan b.p. 121°C (250°F), n-amyl mercaptan b.p. 126°C (259°F), α-methylbutyl mercaptan b.p. 112°C (234°F), α-ethylpropyl mercaptan b.p. 145°C (293°F), n-hexyl mercaptan b.p. 151°C (304°F), 2-mercapto hexane b.p. 140°C (284°F), and 3-mercapto hexane b.p. 57°C (135°F at 20 mm Hg).

Typical diolefins in the $C_5$ boiling range fraction include: isoprene (2-methyl butadiene-1,3), cis and trans piperylenes (cis and trans 1,3-pentadienes), cyclopentadiene, and minor amounts of butadienes. Analogous dienes exist throughout the range of hydrocarbons useful in the present process.

In the $C_5$ streams, there are several $C_5$ olefin isomers, some being less desirable in the etherifications and alkylations to which the streams are dedicated. In the present process at least two of the lesser desired isomers, pentene-1 and 3-methyl butene-1 are isomerized to more reactive isomers, e.g. pentene-3 and 1-methyl butene-1, respectively.

The present invention can be carried out in a catalyst packed column which can be appreciated to contain a vapor phase ascending and some liquid phase as in any distillation. However since the liquid is held up within the column by artificial "flooding", it will be appreciated that there is an increased density over that when the liquid is simply descending because of what would be normal internal reflux.

Referring now to FIG. 1 there is depicted a simplified flow diagram of one embodiment of the invention. Light cracked naphtha and hydrogen are fed to a depentanizer configured as a distillation column reactor 10 via flow lines 2 and 1 respectively. The $C_6$ and heavier materials are removed in the lower stripping section 15. The $C_5$ and lighter material, including the mercaptans, are distilled up into the reaction distillation zone 12 containing the catalytic distillation structure. In the reaction distillation zone 12 substantially all of the mercaptans react with a portion of the diolefins to form higher boiling sulfides which are distilled downward into the stripping section 15 and removed as bottoms via line 8 along with the $C_6$ and heavier material. A rectifying section 16 is provided to insure separation of the sulfides.

The $C_5$ and lighter distillate ($C_5$-), less the mercaptans and/or hydrogen sulfide ($H_2S$), are removed as overheads via flow line 5 and passed through condenser 13 where the condensible materials are condensed. The liquids are collected in accumulator 18 where the gaseous materials, including any unreacted hydrogen, are separated and removed via flow line 3. The unreacted hydrogen may be recycled (not shown) if desired. The liquid distillate product is removed via flow line 9. Some of the liquid is recycled to the column 10 as reflux via line 6.

Generally the $C_5$ and lighter material will be used as feed stock for a etherification unit where the isoamylenes contained therein will be converted to TAME or tertiary amyl ethyl ether (TAEE). This TAME or TAEE is recombined with the $C_6$ bottoms and sent to gasoline blending. While the $C_6$ and heavier materials contain the sulfides, the total sulfur content is still acceptably low.

EXAMPLE 1

In this example a 76 mm (three inch) diameter column is loaded with 9,1m (30 ft) of the catalyst (G-68C) as distillation structure in the upper portion of the column. The lower 11m (70 ft) are filled with inert distillation packing. A light naphtha having the following characteristics is fed to the column.

| | |
|---|---|
| Mercaptan content,wppm | 10 |
| Diolefin content, wt % | 0.254 |

The conditions and results are shown in TABLE II below.

TABLE II

| Conditions: | |
|---|---|
| Light Naphtha feed rate, | 98.9kg/hr (218 lbs/hr) |
| $H_2$ feed rate, | 18g mol/hr (0.04 lb mole/hr) |
| Overhead pressure | 958 kPa (125 psig) |
| Middle catalyst bed temperature | 129°C (265°F) |
| Bottoms rate | 80 kg/hr (176 lbs/hr) |
| Overheads distillate product, | 19kg/hr (42 lbs/hr) |
| Results: | |
| Mercaptans in overheads distillate, wppm | 0.6 |
| Diolefin content, wt % | 0.001 |

Example 2

Using the same column arrangement and the G-68C-1 catalyst a $C_5$ light naphtha fraction of the following characteristics is fed to the column:

| | |
|---|---|
| Mercaptan content, wppm | 100 |
| Diolefin content, wt % | 1.21 |

The conditions and results are shown in TABLE III below.

TABLE III

| Conditions: | |
|---|---|
| Light Naphtha feed rate | 98.9 kg/hr (218 lbs/hr) |
| $H_2$ feed rate | 0.28 $m^3$/hr (10 SCFH) |
| Overhead pressure | 786 kPa (100 psig) |
| Middle catalyst bed temperature | 129°C (265 °F) |
| Bottoms rate | 80.3 kg/hr (177 lbs/hr) |
| Overheads distillate product | 18.6 kg/hr (41 lbs/hr) |
| Feed % $C_5$'s | 21.9% |
| Results: | |
| Mercaptans in overheads distillate, wppm | 0.0 |
| Diolefin content, wt % | .0050 |
| Weight Ratio: | |
| (1) Pentene-1/Total Pentenes in | 19% |
| (2) Pentene-1/Total Pentenes out | 5.8% |
| (3) 3 methyl butene-1/isoamylenes in | 4.8% |
| (4) 3 methyl butene-l/isoamylenes out | 1.4% |

**Claims**

**1.** A process for removing mercaptans and/or hydrogen sulfide from a hydrocarbon stream to produce a hydrocarbon stream with a reduced mercaptan and/or sulfide content, comprising the steps of:

(a) feeding diolefins and a hydrocarbon stream containing mercaptans and/or hydrogen sulfide to a distillation column reactor into a feed zone in said reactor; whereby the said diolefins and the said hydrocarbon stream are together with the hydrogen of step (b) the only feeding components,
(b) feeding hydrogen to said distillation column reactor at a rate to maintain the catalyst in the active form and below that which would cause flooding of the column;
(c) concurrently in said distillation column reactor

(i) contacting the diolefins with said mercaptans, hydrogen sulfide or mixtures thereof contained within said hydrocarbon stream in the presence of hydrogen in a distillation reaction zone containing a catalyst bed containing a supported Group VIII metal oxide catalyst prepared in the form of a catalytic distillation structure and reacting a portion of said mercaptans and/or hydrogen sulfide with a portion of the diolefins thereby forming sulfide products and a distillate product, having a reduced mercaptan and/or hydrogen sulfide content and
(ii) separating said sulfides from said distillate product by fractional distillation;

(d) withdrawing distillate product from said distillation column reactor at a point above said distillation reaction zone, said distillate product having a reduced mercaptan and/or hydrogen sulfide content; and
(e) withdrawing sulfide products from said distillation column reactor at a point below said distillation reaction zone, said distillation column reactor being operated under conditions to maintain froth through out the catalyst bed by control of the bottoms and/or overheads with drawal rate and the overhead pressure in the distillation

column reactor being such that the mixture is boiling in the catalyst bed and being between 96 and 1820 kPa (0 and 250 psig) and the temperature in the distillation reaction zone being within 38 and 149°C (100 to 300°F).

**2.** The process according to claim 1, wherein said hydrocarbon stream is a light cracked naphtha distillate containing a $C_5$ and lighter fraction ($C_5$) and a $C_6$ and heavier fraction ($C_{6+}$), said $C_5$ and lighter fraction is removed as overheads from said distillation column reactor and said $C_6$ and heavier fraction is removed as bottoms from said distillation column reactor.

**3.** The process according to claim 1, wherein there is a molar excess of diolefins to mercaptans and/or hydrogen sulfide.

**4.** The process according to claim 3, wherein substantially all of said mercaptans and/or hydrogen sulfide are reacted with diolefins to form sulfide products and said distillate product is substantially mercaptan and/or hydrogen sulfide free.

**5.** The process according to claim 3, wherein substantially all of said excess of diolefins not reacted with mercaptans and/or hydrogen sulfide are hydrogenated to mono-olefins.

**6.** The process according to claim 1, wherein said diolefins are contained in said hydrocarbon stream.

**7.** The process according to claim 2, which comprises

(a) feeding said light cracked naphtha distillate containing mercaptans and/or hydrogen sulfide and diolefins to a distillation column reactor having a stripping zone and distillation reaction zone;
(b) feeding hydrogen to said distillation column reactor;
(c) separating said $C_{6+}$ fraction from said $C_{5-}$ fraction in said stripping zone and distilling said $C_{5-}$ fraction up into said distillation reaction zone;
(d) concurrently in said distillation reaction zone

(i) contacting the diolefins and mercaptans and/or hydrogen sulfide contained within said light cracked naphtha in the presence of hydrogen in a distillation reaction zone containing a Group VIII metal oxide catalyst supported on a particulate alumina base prepared in the form of a catalytic distillation structure and reacting a portion of said mercaptans and/or hydrogen sulfide with a portion of the diolefins thereby forming sulfide products and a distillate product,
(ii) selectively hydrogenating any remaining diolefins to mono-olefins, and
(ii) separating said sulfides from said distillate product by fractional distillation;

(e) withdrawing a $C_{5-}$ distillate product from said distillation column reactor as overheads, said $C_{5-}$ distillate product having a reduced hydrogen sulfide, mercaptan and diolefin content; and
(f) withdrawing said sulfide products from said distillation column reactor as bottoms along with said $C_{6+}$ fraction.

**8.** The process according to claim 7, wherein there is a molar excess of diolefins to mercaptans and/or hydrogen sulfide within said light cracked naphtha stream.

**9.** The process according to claim 7, wherein substantially all of said mercaptans react with diolefins to produce sulfide products producing a substantially mercaptan and/or hydrogen sulfide free $C_{5-}$ distillate product.

**10.** The process according to claim 7, wherein said cracked light naphtha contains pentene-1 and 3-methyl butene-1 which are isomerized.

**11.** The process according to any of the preceding claims, wherein said Group VIII metal is palladium.

**Patentansprüche**

**1.** Verfahren zum Entfernen von Mercaptanen und/oder Schwefelwasserstoff aus einem Kohlenwasserstoffstrom zur Herstellung eines Kohlenwasserstoffstroms mit einem verminderten Mercaptan- und/oder Sulfidgehalt, umfassend

die Schritte von:

(a) Zuführen von Diolefinen und einem Kohlenwasserstoffstrom, der Mercaptane und/oder Schwefelwasserstoff enthält, zu einem Destillationskolonnenreaktor in eine Zuführungszone in den Reaktor; wobei die Diolefine und der Kohlenwasserstoffstrom zusammen mit dem Wasserstoff von Schritt (b) die einzigen Zuführungskomponenten darstellen;
(b) Zuführen von Wasserstoff zu dem Destillationskolonnenreaktor mit einer Geschwindigkeit, um den Katalysator in der aktiven Form zu halten und unterhalb jener, die Flutung der Säule verursachen würde;
(c) gleichzeitig in dem Destillationskolonnenreaktor

(i) In-Kontakt-Bringen der Diolefine mit den Mercaptanen, Schwefelwasserstoff oder Gemischen davon, die in dem Kohlenwasserstoffstrom enthalten sind, in Gegenwart von Wasserstoff in einer Destillationsreaktionszone, die ein Katalysatorbett enthält, das einen getragenen Katalysator von einem Oxid von einem Metall der Gruppe VIII enthält, der in Form einer katalytischen Destillationsstruktur hergestellt ist und Umsetzen eines Teils der Mercaptane und/oder des Schwefelwasserstoffs mit einem Teil der Diolefine, wodurch Sulfidprodukte und ein Destillatprodukt mit vermindertem Mercaptan- und/oder Schwefelwasserstoffgehalt gebildet werden und
(ii) Trennen der Sulfide von dem Destillatprodukt durch fraktionierte Destillation;

(d) Abziehen des Destillatprodukts aus dem Destillationskolonnenreaktor bei einem Punkt oberhalb der Destillationsreaktionszone, wobei das Destillatprodukt einen verminderten Mercaptan- und/oder Schwefelwasserstoffgehalt aufweist; und
(e) Abziehen von Sulfidprodukten aus dem Destillationskolonnenreaktor an einem Punkt unterhalb der Destillationsreaktionszone, wobei der Destillationskolonnenreaktor unter Bedingungen arbeitet, um Schaum in dem gesamten Katalysatorbett durch Steuern der Sumpf- und/oder Kopfproduktabzugsrate aufrechtzuerhalten und wobei der Kopfproduktdruck in dem Destillationskolonnenreaktor derart ist, dass das Gemisch in dem Katalysatorbett siedet und zwischen 96 und 1820 kPa (0 und 250 psig) aufweist und die Temperatur in der Destillationsreaktionszone innerhalb 38 und 149°C (100 bis 300°F) ist.

**2.** Verfahren nach Anspruch 1, wobei der Kohlenwasserstoffstrom ein Crackleichtbenzindestillat darstellt, das eine $C_5$- und eine leichter siedende Fraktion ($C_{5-}$) und eine $C_6$- und eine höher siedende Fraktion ($C_{6+}$) enthält, wobei die $C_5$- und leichter siedende Fraktion als Kopfprodukte von dem Destillationskolonnenreaktor entfernt wird und die $C_6$- und höher siedende Fraktion als Sumpfprodukte aus dem Destillationskolonnenreaktor entfernt wird.

**3.** Verfahren nach Anspruch 1, wobei es einen molaren Überschuss von Diolefinen zu Mercaptanen und/oder Schwefelwasserstoff gibt.

**4.** Verfahren nach Anspruch 3, wobei im Wesentlichen das Gesamte von den Mercaptanen und/oder dem Schwefelwasserstoff mit Diolefinen umgesetzt wird, um Sulfidprodukte zu bilden und das Destillatprodukt im Wesentlichen frei von Mercaptan und/oder Schwefelwasserstoff ist.

**5.** Verfahren nach Anspruch 3, wobei im Wesentlichen der gesamte Überschuss an Diolefinen, der nicht mit Mercaptanen und/oder Schwefelwasserstoff umgesetzt wurde, zu Monoolefinen hydriert wird.

**6.** Verfahren nach Anspruch 1, wobei die Diolefine in dem Kohlenwasserstoffstrom enthalten sind.

**7.** Verfahren nach Anspruch 2, das umfasst

(a) Zuführen des Crackleichtbenzindestillats, das Mercaptane und/oder Schwefelwasserstoff und Diolefine enthält, zu einem Destillationskolonnenreaktor mit einer Abstreifzone und Destillationsreaktionszone;
(b) Zuführen von Wasserstoff zu dem Destillationskolonnenreaktor;
(c) Trennen der $C_{6+}$-Fraktion von der $C_{5-}$-Fraktion in der Abstreifzone und Destillieren der $C_{5-}$-Fraktion aufwärts in die Destillationsreaktionszone;
(d) gleichzeitig in der Destillationszone;

(i) In-Kontakt-Bringen der Diolefine und Mercaptane und/oder Schwefelwasserstoff, die in dem Crackleichtbenzin enthalten sind, in Gegenwart von Wasserstoff in einer Destillationsreaktionszone, die einen Katalysator von einem Oxid von einem Metall der Gruppe VIII enthält, getragen auf einer teilchenförmigen

Aluminiumoxidgrundlage, hergestellt in Form einer katalytischen Destillationsstruktur und Umsetzen eines Teils der Mercaptane und/oder des Schwefelwasserstoffs mit einem Teil der Diolefine, wodurch Sulfidprodukte und ein Destillatprodukt gebildet werden,
(ii) selektives Hydrieren jeglicher verbleibender Diolefine zu Monoolefinen, und
(iii) Trennen der Sulfide von dem Destillatprodukt durch fraktionierte Destillation;

(e) Abziehen eines $C_{5-}$-Destillatprodukts aus dem Destillationskolonnenreaktor als Kopfprodukte, wobei das $C_{5-}$-Destillatprodukt einen verminderten Schwefelwasserstoff-, Mercaptan- und Diolefingehalt aufweist; und
(f) Abziehen der Sulfidprodukte aus dem Destillationskolonnenreaktor als Sumpfprodukte zusammen mit der $C_{6+}$-Fraktion.

**8.** Verfahren nach Anspruch 7, wobei es in dem Crackleichtbenzinstrom einen molaren Überschuss an Diolefinen zu Mercaptanen und/oder Schwefelwasserstoff gibt.

**9.** Verfahren nach Anspruch 7, wobei im Wesentlichen die gesamten Mercaptane mit Diolefinen reagieren, um Sulfidprodukte herzustellen, unter Erzeugen eines im Wesentlichen von Mercaptan und/oder Schwefelwasserstoff freien $C_{5-}$-Destillatprodukts.

**10.** Verfahren nach Anspruch 7, wobei das Crackleichtbenzin Penten-1 und 3-Methylbuten-1, die isomerisiert werden, enthält.

**11.** Verfahren nach einem der vorangehenden Ansprüche, wobei das Metall der Gruppe VIII Palladium ist.

## Revendications

**1.** Procédé pour l'élimination de mercaptans et/ou de sulfure d'hydrogène à partir d'un flux d'hydrocarbure afin de produire un flux d'hydrocarbure avec une teneur réduite en mercaptans et/ou en sulfure, comprenant les étapes :

(a) d'alimentation avec des dioléfines et avec un flux d'hydrocarbure contenant des mercaptans et/ou du sulfure d'hydrogène vers un réacteur à colonne de distillation dans une zone d'alimentation dans ledit réacteur par laquelle lesdites dioléfines et ledit flux d'hydrocarbure sont, de concert avec l'hydrogène de l'étape (b), les seuls composants d'alimentation ;
(b) d'alimentation avec de l'hydrogène dudit réacteur à colonne de distillation à une vitesse afin de maintenir le catalyseur sous la forme active et en dessous de la vitesse qui provoquerait une inondation de la colonne ;
(c) simultanément dans ledit réacteur à colonne de distillation

(i) de mise en contact des dioléfines avec lesdits mercaptans, ledit sulfure d'hydrogène ou des mélanges de ceux-ci contenus dans ledit flux d'hydrocarbure en présence d'hydrogène dans une zone de réaction de distillation contenant un lit de catalyseur contenant un oxyde de métal du Groupe VIII supporté, préparé sous la forme d'une structure de distillation catalytique et mise en réaction d'une partie desdits mercaptans et/ou dudit sulfure d'hydrogène avec une partie des dioléfines formant ainsi des produits sulfures et un produit distillat ayant une teneur réduite en mercaptans et/ou en sulfure d'hydrogène et
(ii) de séparation desdits sulfures à partir dudit produit distillat par distillation fractionnée.

(d) de retrait du produit distillat à partir dudit réacteur à colonne de distillation à un point au-dessus de ladite zone de réaction de distillation, ledit produit distillat ayant une teneur en mercaptans et/ou en sulfure d'hydrogène réduite ; et
(e) de retrait des produits sulfures à partir dudit réacteur à colonne de distillation à un point en dessous de ladite zone de réaction de distillation, ledit réacteur à colonne de distillation étant mis en fonctionnement dans des conditions permettant de conserver une mousse dans tout le lit de catalyseur par un contrôle de la vitesse de retrait en queue et/ou en tête, et la pression de tête dans le réacteur à colonne de distillation étant telle que le mélange bout dans le lit du catalyseur et se trouve entre 96 et 1820 kPa (0 et 250 psig) et la température, dans la zone de réaction de distillation, se trouvant entre 38°C et 149°C (100°F et 300°F).

**2.** Procédé selon la revendication 1, dans lequel ledit flux d'hydrocarbure est un distillat naphta de craquage léger contenant un fraction de composés en $C_5$ et plus légers ($C_{5-}$) et une fraction de composés en $C_6$ et plus lourds ($C_{6+}$), ladite fraction de composés en $C_5$ et plus légers est éliminée en tant que distillats de tête à partir dudit

réacteur à colonne de distillation, et ladite fraction de composés en $C_6$ et plus lourds est éliminée en tant que distillats de queue à partir dudit réacteur à colonne de distillation.

**3.** Procédé selon la revendication 1, dans lequel il y a un excès molaire de dioléfines par rapport aux mercaptans et/ou au sulfure d'hydrogène.

**4.** Procédé selon la revendication 3, dans lequel pratiquement la totalité desdits mercaptans et/ou dudit sulfure d'hydrogène est mise en réaction avec des dioléfines afin de former des produits sulfures et dans lequel ledit produit distillat est pratiquement sans mercaptan et/ou sulfure d'hydrogène.

**5.** Procédé selon la revendication 3, dans lequel pratiquement la totalité dudit excès de dioléfines qui n'a pas réagi avec les mercaptans et/ou le sulfure d'hydrogène est hydrogénée en mono-oléfines.

**6.** Procédé selon la revendication 1, dans lequel lesdites dioléfines sont contenues dans ledit flux d'hydrocarbure.

**7.** Procédé selon la revendication 2, qui comprend

(a) l'alimentation dudit distillat naphta de craquage léger contenant des mercaptans et/ou du sulfure d'hydrogène et desdites dioléfines vers un réacteur à colonne de distillation ayant une zone de rectification et une zone de réaction de distillation ;
(b) l'alimentation avec de l'hydrogène dudit réacteur à colonne de distillation ;
(c) la séparation de ladite fraction en $C_{6+}$ à partir de ladite fraction en $C_{5-}$ dans ladite zone de rectification et la distillation de ladite fraction en $C_{5-}$ jusqu'à ladite zone de réaction de distillation ;
(d) de manière simultanée dans ladite zone de réaction de distillation
(i) la mise en contact des dioléfines et des mercaptans et/ou du sulfure d'hydrogène contenu dans ledit naphta de craquage léger, en présence d'hydrogène dans une zone de réaction de distillation contenant un catalyseur oxyde de métal du Groupe VIII supporté sur une base d'alumine particulaire préparée sous la forme d'une structure de distillation catalytique et la mise en réaction d'une partie desdits mercaptans et/ou dudit sulfure d'hydrogène avec une partie des dioléfines formant ainsi des produits sulfures et un produit distillat,

(ii) l'hydrogénation sélective de toutes les dioléfines restantes en mono-oléfines, et
(iii) la séparation desdits sulfures à partir dudit produit distillat par distillation fractionnée

(e) le retrait d'un produit distillat en $C_{5-}$ à partir dudit réacteur à colonne de distillation en tant que distillats de tête, ledit produit distillat en $C_{5-}$ ayant une teneur réduite en sulfure d'hydrogène, mercaptans et dioléfines ; et
(f) le retrait desdits produits sulfures à partir dudit réacteur à colonne de distillation en tant que distillats de queue de concert avec ladite fraction en $C_{6+}$.

**8.** Procédé selon la revendication 7, dans lequel il y a un excès molaire de dioléfines par rapport aux mercaptans et/ou au sulfure d'hydrogène dans ledit flux de naphta de craquage léger.

**9.** Procédé selon la revendication 7, dans lequel pratiquement la totalité desdits mercaptans réagit avec des dioléfines afin de produire des produits sulfures, produisant un produit distillat en $C_5$- pratiquement sans mercaptan et/ou sulfure d'hydrogène.

**10.** Procédé selon la revendication 7, dans lequel ledit naphta de craquage léger contient du pentène-1 et du 3-méthyle butène-1 qui sont isomérisés.

**11.** Procédé selon l'une quelconque des revendications précédentes, dans lequel ledit métal du Groupe VIII est le palladium.

FIGURE 1.

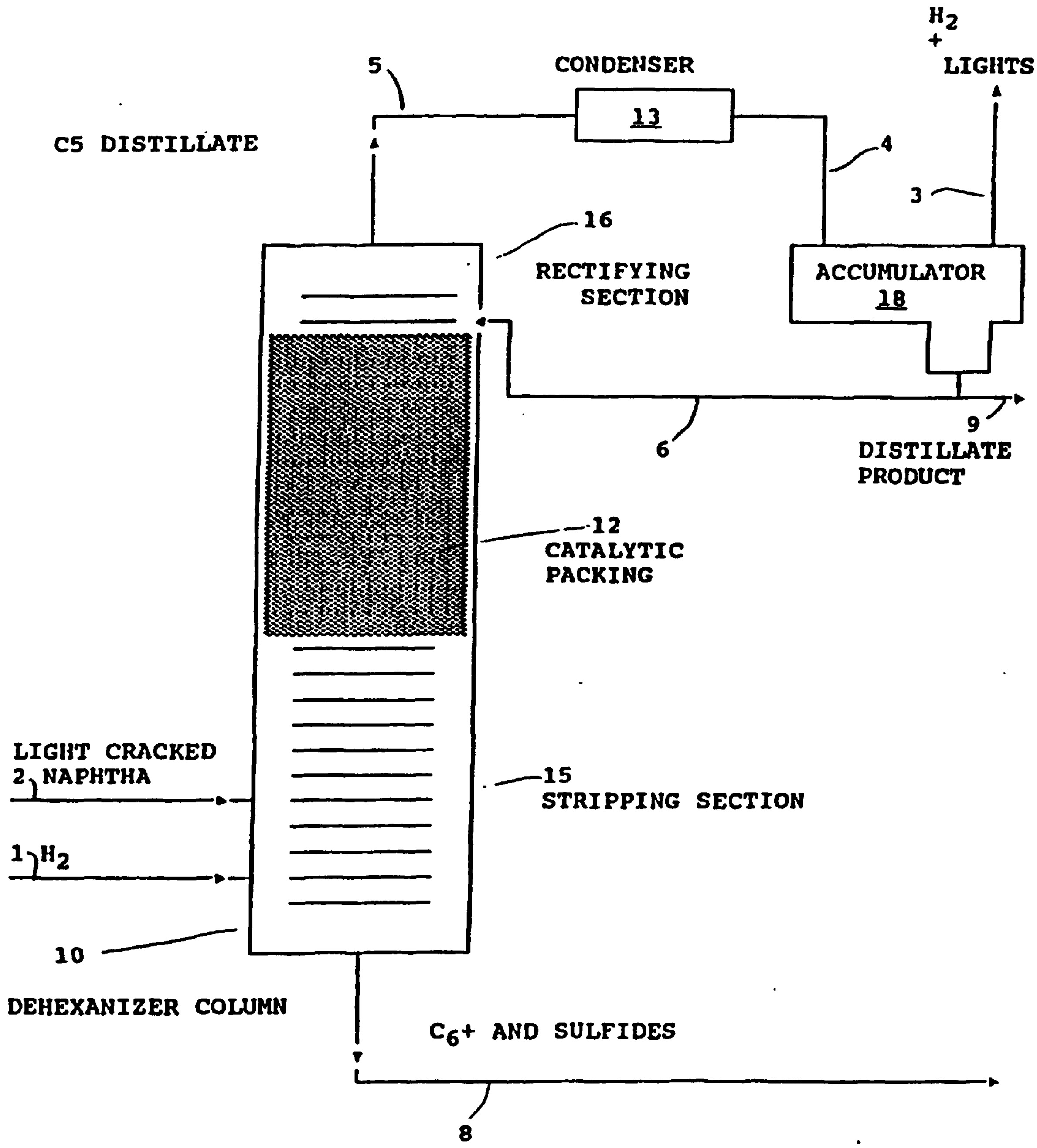

C5 DISTILLATE
5
CONDENSER
13
4
$H_2$ + LIGHTS
3
16
RECTIFYING SECTION
ACCUMULATOR 18
6
9
DISTILLATE PRODUCT
12
CATALYTIC PACKING
LIGHT CRACKED NAPHTHA
2
15
STRIPPING SECTION
1
$H_2$
10
DEHEXANIZER COLUMN
$C_6$+ AND SULFIDES
8